# EUROPEAN PATENT APPLICATION

(11) **EP 1 251 109 A1**
(43) Date of publication of application: **23.10.2002**
(21) Application number: 02008738.3
(22) Date of filing: 18.04.2002
(51) Int. Cl.: C04B 18/10, C04B 35/622, C04B 35/565, C04B 33/13, C04B 33/36, E04H 9/16, E04D 13/10

(54) **Method for obtaining a roofing tile and snow-melting, tiled roof using the roofing tile**

(30) Priority: 19.04.2001 JP 2001121606
(71) Applicant: Minebea Co., Ltd., Kitasaku-gun, Nagano-ken 3849-2100 (JP)
(72) Inventor: Hokkirigawa, Kazuo, Yonezawa-shi, Yamagata-ken 992-0053 (JP); Obara, Rikuro, Minebea Co., Ltd., Kitasaku-gun, Nagano-ken 3849-2100 (JP)
(74) Representative: Goddar, Heinz J., Dr.

(57) **Abstract**

A tile comprises a fire resistant ceramic, which is obtained by mixing and kneading defatted bran obtained from rice bran and a thermosetting resin, primarily baking the resulting mixture in an inert gas at 700°C to 1000°C, crushing the resulting product into carbonized powder, mixing and kneading the carbonized powder with a ceramic powder, a solvent and, optionally, a binder to provide a plasticized mixture (ceramic-solvent mixture), pressure forming the mixture at a compression pressure of 10 MPa to 100 MPa, and heat treating the resulting compact again in an atmosphere of an inert gas at 500 to 1400°C. The tile is used for a snow-melting roof, by embedding a heat-generating electric resistor within the tile.

## Description

This invention relates to a roofing tile made of a novel type of fire resistant CRB ceramic material and also to a snow-melting roof structure using the same.

Currently employed materials used for making roofing tiles include clay and cement. An ordinary roofing tile is so thick that the weight per unit tile is very great, thus imposing a great load on pillars supporting the roof.

Roofing tiles used for snow-melting roof are also made of clay or cement, thus presenting the problem that a great load is imposed on the pillars supporting a roof as well.

Moreover, with the tiles used for snow-melting roof, it is essential to build a heating element in individual tiles.

An object of the invention is to provide a roofing tile which overcome the drawbacks of the prior-art counterparts and which is lightweight, weatherable and resistant to corrosion and is unlikely to suffer an influence of a change in humidity along with the ease in fabrication.

Another object of the invention is to provide a snow-melting roof structure using such roofing tiles as mentioned above.

The roofing tile of the invention fundamentally makes use of a fire resistant CRB ceramic obtained by improving an RB ceramic and/or a CRB ceramic.

The RB ceramic and CRB ceramic are those materials made according to the following process.

The carbon material obtained by using rice bran produced at 900,000 tons/year in Japan and at 33,000,000 tons/year in the world is known according to the studies made by Kazuo Hokkirigawa, one of co-inventors of this application (see "Functional Materials" May 1997, Vol. 17, No. 5. pp. 24 to 28).

In this literature, reference is made to a carbon material (hereinafter referred to as the RB ceramic) and the preparation thereof wherein the material is obtained by mixing and kneading defatted bran derived from rice bran and a thermosetting resin, followed by drying a pressure formed compact and carbonizing the dried compact in an atmosphere of an inert gas.

With such a method of forming the RB ceramic as described above, however, it has been practically difficult to form the compact with high precision because there occurs the discrepancy in dimensions by as much as 25% in terms of a contraction ratio of the dimensions of the compact obtained by pressure forming to those of a finished compact obtained after baking the former in the inert gas. However, another ceramic (the CRB ceramic) representing an improvement on the RB ceramic has since been developed.
The CRB ceramic is made of an improved material of the RB ceramic that is obtained from defatted bran derived from rice bran and a thermosetting resin. More particularly, the defatted bran derived from rice bran and a thermosetting resin are mixed and kneaded and subjected to a primary baking in an inert gas at 700°C to 1000°C, followed by crushing to a size of 60 mesh or below to obtain a carbonized powder. The powder and a thermosetting resin are mixed and kneaded, and pressure formed at a pressure o 20 MPa to 30 MPa, and the resulting compact is heat treated again in an atmosphere of an inert gas at 100°C to 1100°C to obtain a resinous or porous ceramic. The greatest difference from the RB ceramic resides in that, in contrast with the RB ceramic having the contraction ratio of the dimensions of the compact obtained by pressure forming to those of the finished compact at as high as 25%, the CRB ceramic is superior to the RB ceramic in respect of the contraction ratio at not more than 3%, which is very low.

Further, in order to impart a fire resistance to the CRB ceramic, the primarily baked carbonized powder is mixed and kneaded with one or more of ceramic powders selected from the group consisting of SiO₂, Si₃N₄, ZrO₂, Al₂O₃, SiC, BN, WC, TiC, sialons, porcelain clay, feldspar clay and kaolin along with a solvent and, if desired, a binder, to provide a plasticized product (i.e. a kind of clay-water mixture). This is pressure formed at a pressure of 10 MPa to 100 MPa and the resulting compact is heat treated again in an atmosphere of an inert gas at 100 to 1400°C to obtain a ceramic material. This ceramic material is used in the invention (hereinafter referred to as fire resistant CRB ceramic).

In the practice of the invention, the fire resistant CRB ceramic that is weatherable, lightweight, hard and physically strong is used as a material for roofing tile.

The general properties of the RB ceramic and CRB ceramic, which are precursors for the fire resistant CRB ceramic and may be employed as an electric resistor for heat generation in the present invention are indicated below.
- higher hardness
- smaller expansion coefficient
- good electric conductivity
- specific gravity is small with light weight
- excellent abrasion resistance
- easy to form and easy to produce in a die
- Ceramics having a diversity of features can be formed by formulation of different types of resins and ceramics.
- the material being made of rice bran, they have little adverse effect on global environment, leading to conservation of natural resources.

Hence, this ceramic material meets requirements, particularly, suited for application to buildings, such as good weatherability, light weight, excellent abrasion resistance, unlikeliness to damage, long life and the like. Especially, the ceramic obtained from the CRB ceramic undergoing a secondary heat treatment temperature of 600°C or over is very high in hardness and porous, has good air permeability, is lightweight because of the small specific gravity and strong, and is thus excellent as an outdoor building material.

The inventor made roofing tiles from the fire resistant CRB ceramic material and found that different types of roofing tiles having a diversity of characteristic properties can be made.

Although RB ceramic exhibits a difference in contraction ratio between the dimension of a compact as formed and that of a finished compact as great as 25%, a roofing tile formed of the RB ceramic may be controlled in size by cutting the roofing tile made beforehand. Thus, embodiments using the RB ceramic are not excluded from the scope of the invention. Except the final dimension, both RB ceramic and CRB ceramic have substantially similar properties. In view of this, the use of RB ceramic should not be excluded from the embodiment of the invention.

In this connection, because a high dimensional accuracy is ensured by one forming, the CRB ceramic is preferred in the practice of the invention.

Moreover, it has also been found that when conventional ceramics or steel-based metal materials are used in appropriate combinations, roofing tiles having more diverse characteristic properties can be made.

More particularly, the invention provides a black, hard and lightweight roofing tile which is made of a fire resistant CRB ceramic and in which an electric resistor for heat generation made of an RB ceramic or CRB ceramic and a metal material, such as a nichrome wire, is incorporated, and also a snow-melting roof structure using the tiles.
Fig. 1 is a schematic perspective view of a roofing tile according to the invention;
Fig. 2 is a schematic perspective view of a roofing tile including a heating element therein; and
Fig. 3 is an illustrative view showing a snow-melting roof structure according to the invention.

The Fire resistant CRB ceramic, RB ceramic or CRB ceramic materials according to the invention is made of defatted bran irrespective of the kind of rice and may be of either domestic or foreign origin.

Further, for the thermosetting resin, any thermosetting resin may be used as long as it has thermosetting property, and typical examples thereof include phenolic resins, diaryl phthalate resins, unsaturated polyester resins, epoxy resins, polyimide resins, and triazine resins, of which phenolic resins are preferably used.

Furthermore, a thermoplastic resin such as polyamides and the like may also be used in combination in such amounts as not to depart from the spirit and scope of the invention.

The mixing ratio by weight between the defatted bran and the thermosetting resin range 50:50 to 90:10, preferably 70:30 to 80:20.

Next, a method of preparing the CRB ceramic material is briefly described hereinafter.

The defatted bran derived from rice bran and a thermosetting resin are mixed and kneaded, and primarily baked in an inert gas at 700 to 1000°C, followed by crushing the resulting carbonized compact into powder. The powder and a thermosetting resin are further mixed and kneaded, and pressure formed at a pressure of 20 MPa to 30 MPa, and the resulting compact is heat treated again in an atmosphere of an inert gas at 100°C to 1,100°C. The thermosetting resin used for the primary baking should preferably be a liquid resin having a relatively small molecular weight.

For the primary baking, it is usual to use a rotary kiln, and the baking time ranges from about 40 to 120 minutes. The mixing ratio between the carbonized powder obtained through the primary baking and the thermosetting resin ranges from 50:50 to 90:10, preferably 70:30 to 80:20 on the weight basis.

The pressure for the pressure forming of the kneaded product of the carbonized powder and the thermosetting resin ranges from 20 to 30 MPa, preferably from 21 to 25 MPa. The die temperature is preferably at about 150°C.

For the heat treatment, a well controlled electric furnace is normally employed, and the heat treating time ranges from about 60 to 360 minutes.

A preferred heat treating temperature ranges from 600°C to 1100°C, and a heating rate before reaching the heat treating temperature is such that relatively moderate temperature rise is required up to 500°C. More particularly, the heating rate is at 0.5 to 2°C/minute, preferably about 1°C/minute.

In order to lower the temperature after baking by such a heat treatment, a cooling rate is required to be relatively moderate until reaching 500°C. Upon the temperature dropping below 500°C,the compact is left to cool by itself. More particularly, the cooling rate is at 0.5 to 4°C/minute, preferably at about 1°C/minute. The inert gas used in the primary baking and heat treatment may be any of helium, argon, neon or nitrogen gas, of which nitrogen gas is preferred. It will be noted that the fire resistant CRB ceramic used in the invention should preferably be dehydrated at a temperature of 100°C after forming.

The roofing tile of the invention can be made by integrally assembling or building an electric resistor for heat generation made of an RB ceramic, CRB ceramic or a metal material such as a nichrome wire in a fire resistant CRB ceramic tile when formed.

As a matter of course, clay, cement, metals, synthetic resins, which are ordinarily employed as a conventional tile material, may also be used in combination with the fire resistant CRB ceramic material. Especially, in order that the roofing tile of the invention is further improved in fire resistance, a mixture of a carbonized powder of the CRB ceramic and a fire resistant CRB ceramic that is secondarily heat treated after part thereof has been replaced by a ceramic powder may be used.

Examples of the ceramic powder include SiO₂, Si₃N₄, ZrO₂, Al₂O₃, SiC, BN, WC, TiC, sialons (Si-Al-O-N-based compound solid solutions), porcelain clay, feldspar clay, kaolin and the like. These ceramic powders may be used singly or in combination of two or more. The mixing ratio to the carbonized powder is conveniently in the range of 10 to 150:100 on the weight basis.

The embodiments of the invention are summarized below.
(1) A roofing tile comprised of a fire resistant CRB ceramic, which is obtained by mixing and kneading defatted bran derived from rice bran and a thermosetting resin, primarily baking the resulting mixture in an inert gas at 700°C to 1000°C, crushing the resulting compact into carbonized powder, mixing and kneading the carbonized powder with a ceramic powder, a solvent and, optionally, a binder to provide a plasticized mixture (ceramic-solvent mixture), pressure forming the mixture at a pressure of 10 MPa to 100 MPa, and heat treating the resulting compact again in an atmosphere of an inert gas at 100 to 1400°C.
(2) The roofing tile made of the fire resistant CRB ceramic as recited in (1) above, wherein a projection for fixing the tile to a cleat therefor is formed integrally with the tile.
(3) The roofing tile as recited in (1) or (2) above, wherein terminal holes are provided in the tile so as to permit passage of an electric current.
(4) The roofing tile as recited in any one of (1) to (3) above, wherein an electric resistor for heat generation is integrally embedded inside the tile.
(5) The roofing tile as recited in (4) above, wherein the electric resistor is made of a nichrome wire, an RB ceramic or a CRB ceramic.
(6) The roofing tile as recited in (1) above, wherein the ceramic powder consists of one or more of powders of ceramics selected from the group consisting of SiO₂, Si₃N₄, ZrO₂, Al₂O₃, SiC, BN, WC, TiC, sialons, porcelain clay, feldspar clay and kaolin.
(7) The roofing tile as recited in (1) above, wherein the thermosetting resin consists of one or more of resins selected from the group consisting of phenolic resins, diaryl phthalate resins, unsaturated polyester resins, epoxy resins, polyimide resins and triazine resins
(8) The roofing tile as recited in (1) above, wherein the binder consists of an organic binder and/or an inorganic binder.
(9) The roofing tile as recited in (1) above, wherein the mixing ratio by weight between the defatted bran and the thermosetting resin ranges from 50:50 to 90:10.
(10) The roofing tile as recited in (1) above, wherein the mixing ratio by weight of the carbonized powder and the ceramic powder ranges from 5:95 to 95:5.
(11) A snow-melting roof comprising a plurality of roofing tiles set forth in any one of (1) to (10), wherein individual roofing tiles have terminal holes, each having a terminal of a conductive member embedded in each tile, and the conductive member in one tile is electrically connected through a terminal provided at each cleat to a conductive member of an adjacent tile so that the plurality of roofing tiles are arranged to be electrically connected with one another whereby when a potential is applied across the plurality of roofing tiles, heat is generated in individual tiles to permit snow melting.

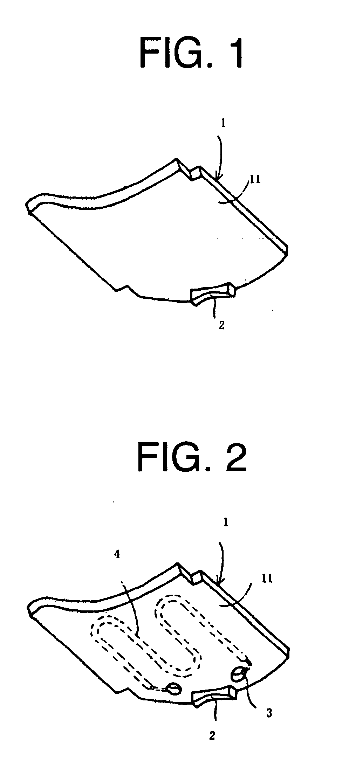

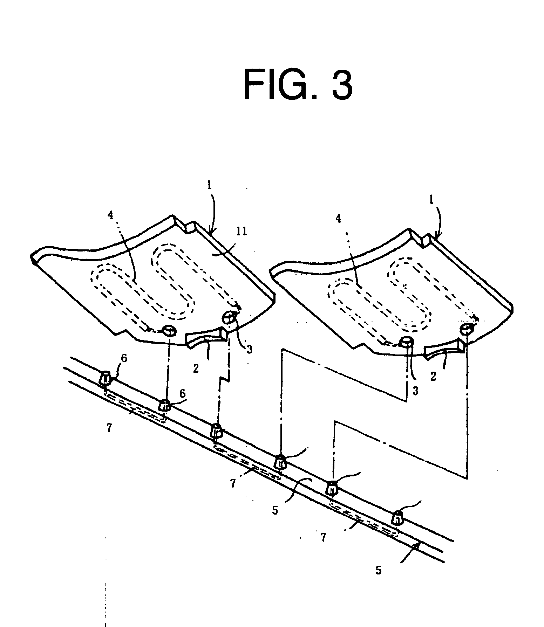

Reference is now made to Figs. 1 to 3, showing a tile 1 with a standard dimension. The tile 1 has a projection 2 and terminal holes 3 (which are shown as a female type, but may be of the male type), both provided at back side 11 of the tile 1. The tile also has a resistor 4, which may be provided, if necessary, and works as a heater. In Fig. 3, a crosspiece 5 for tiles is shown as having terminals 6 (shown as a female type, but a male type may be used) and lead wires 7 connecting the terminals therewith.

The projection 2 is a protruded portion for fixing tiles to the crosspiece 5. This is not always formed as projected. Alternatively, a through-hole may be made in individual tiles for fixing with a wire, a bolt and nut, a weatherable rope or the like.

As is particularly shown in Fig. 3, one tile and an adjacent tile are electrically connected with each other by inserting the terminals 6 (shown as a male type although a female type may be used) into corresponding terminal holes 5 of the tiles to be electrically connected via the lead wire 7 in a manner as shown. In this way, the tiles over the entire roof are electrically connected with one another to complete a snow-melting roof structure.

This structure ensures passage of an electric current to individual tiles and enables one to confirm the current passage.

The resistor 4 can be built in the tile by embedding a metal conductor, such as a nichrome wire or the like, when forming the tile which can then be baked together. In this connection, however, the resistor working as a heater should not be always a metal resistor.

For instance, an RB ceramic or CRB ceramic material is electrically conductive in nature. Such an RB ceramic or CRB ceramic is formed in the form of a heating element beforehand and can be integrated with the CRB ceramics when the fire resistant CRB ceramics is subjected to a secondary heat treatment.

Further, the resistor 4 may be formed on the back surface of the tile by means of a weatherable conductive ink or paint.

The tile of the invention may be used in the field of applications other than snow-melting roof. Because of the light weight and good weatherability, earthquake-proofing of a house can be enhanced as a whole.

The tile of the invention is black in color after molding, and a desired hue can be imparted to the tile by applying thereto a coating, preferably an inorganic coating dispersing a pigment in an inorganic vehicle.

The tile of the invention is fundamentally lightweight, hard and physically strong along with a high resistance to corrosion and excellent fire-proofing properties. If the mixing ratio of ceramic powder, secondary heat treating temperature and the like conditions are properly controlled, a diversity of properties may be imparted to a final tile.

The invention is more particularly described by way of examples, which should not be construed as limiting the invention thereto.

### Example 1

### (Preparation of fire resistant CRB ceramic)

55 kg of defatted bran derived from rice bran and 45 kg of a liquid phenolic resin (resol) were mixed and kneaded while heating to 50°C to 60°C. A plastic homogeneous mixture was obtained.

The mixture was subjected to a baking in a rotary kiln in an atmosphere of nitrogen at 1000°C for 70 minutes. The resulting carbonized, baked compact was crushed by means of a crusher and sieved through a 200 mesh screen to obtain a carbonized powder having an average particle size of 100 µm.

70 kg of the thus obtained carbonized powder, 10 kg of silica powder, 20 kg of alumina powder, 10 kg of a phenolic resin used as a binder, 5 kg of sodium silicate, and 15 kg of water and 5 kg of ethanol, both used as a solvent, were mixed and kneaded to obtain a homogeneous mixture having plasticity.

The silica used had a particle size of 5 to 10 µm and the alumina had a particle size of 10 to 20 µm.

### (Forming of fire resistant tile)

Next, the plasticized mixture was subjected to pressure forming at a pressure of 80 MPa to provide a tile 1 having a projection 2 as shown in Fig. 1. The temperature of the die was 150°C.

The compact was removed from the die, after which it was heated in an atmosphere of nitrogen at a heating rate of 2.5°C/minute up to 500°C and maintained at 500°C over 60 minutes, followed by sintering at 1150 to 1200°C for 100 to 130 minutes.

Subsequently, the temperature was lowered to 500°C at a cooling rate of 2 to 3°C/minute, and was allowed to cool naturally upon the temperature dropping below 500°C, thereby obtaining a tile compact .

### (Characteristics of the obtained tile)

Hard and strong.

Good weatherability and corrosion resistance .

Good Fire-proofing properties .

### Example 2

### (Preparation of fire resistant CRB ceramic)

75 kg of defatted bran derived from rice bran and 25 kg of a liquid phenolic resin (resol) were mixed and kneaded while heating to 50°C to 60°C. A plastic homogeneous mixture was obtained.

The mixture was subjected to a baking in a rotary kiln in an atmosphere of nitrogen at 900°C for 60 minutes. The resulting carbonized, baked compact was crushed by means of a crusher and sieved through a 200 mesh screen to obtain a carbonized powder having an average particle size of 90 µm.

80 kg of the thus obtained carbonized powder, 60 kg of alumina powder, 10 kg of aluminium phosphate used as a binder, and 25 kg of water used as a solvent were mixed and kneaded to obtain a homogeneous mixture having plasticity.

The alumina used had an average particle size of 10 to 20 µm.

### ( Forming of fire resistant tile)

Next, a resistor 4 made of a nichrome wire was embedded in the plasticized mixture as shown in Fig. 2, followed by pressure forming at a pressure of 50 MPa to provide a tile 1 having a projection 2 and female terminals 3. The temperature of the die was 150°C.

The compact was removed from the die, after which it was heated in an atmosphere of nitrogen at a heating rate of 2.0°C/minute up to 500°C and maintained at 500°C over 60 minutes, followed by sintering at 1100°C for 100 to 130 minutes.

Subsequently, the temperature was lowered to 500°C at a cooling rate of 2°C/minute, and was allowed to cool naturally upon the temperature dropping below 500°C,thereby obtaining a tile compact.

### (Characteristics of the obtained tile)

The fire resistant CRB ceramic has a specific gravity greater than that of the ceramic of Example 1, and is hard and resistant to heat.

The tile has good weatherability and corrosion resistance along with good fire-proofing properties.

### Example 3

A fire resistant CRB ceramic tile having a heating element made of a CRB ceramic is made in the following manner.

### (Preparation of CRB ceramic)

75 kg of defatted bran derived from rice bran and 25 kg of a liquid phenolic resin (resol) were mixed and kneaded while heating to 50°C to 60°C. A plastic homogeneous mixture was obtained.

The mixture was subjected to a primarily baking by use of a rotary kiln in an atmosphere of nitrogen at 900°C for 60 minutes. The resultant carbonized, baked compact was crushed by means of a crusher and sieved through a 100 mesh screen to obtain a carbonized powder having a size of 50 to 250 µm.

75 kg of the thus obtained carbonized powder and 25 kg of a solid phenolic resin (resol) were mixed and kneaded while heating to 100°C to 150°C to obtain a homogeneous mixture having plasticity.

### ( forming of a heating element)

The plasticized mixture was pressure formed in the form of an electric resistor for heat generation, shown in Fig. 2, at a pressure of 22 MPa. The temperature of the die was at 150°C.

The resulting compact 2 was removed from the die, and was heated at a heating rage of 1°C/minute up to 500°C in an atmosphere of nitrogen and maintained at 500°C for 60 minutes, followed by heat treatment at 700°C for about 120 minutes.

Subsequently, the temperature was lowered to 500°C at a cooling rate of 2 to 3°C/minute, and was allowed to cool naturally upon the temperature dropping below 500°C .

### (Characteristics of the resultant heating element)

The element is lightweight and strong with good working properties.

The electric resistance is stable within a certain range.

When integrally formed with a tile, the heating element does not undergo oxidation and is stable against temperature.

### ( Forming of roofing tile)

The fire resistant CRB ceramic of Example 2 was used, and the heating element obtained above was placed in position of a mold, followed by pressure forming into a tile 1 having a projection 2 and female terminals 3 shown in Fig. 2 at a pressure of 75 MPa. The die temperature was set at 150°C.

The resulting compact was removed from the die, and was heated to 500°C at a heating rate of 2.0°C/minute in an atmosphere of nitrogen and maintained at 500°C for 60 minutes, followed by sintering at 1100°C for 100 to 130 minutes.

Thereafter, the temperature was lowered to 500°C at a cooling range of 2°C/minute and was allowed to cool naturally upon the temperature dropping below 500°C,thereby obtaining a tile compact.

### (Characteristics of the resultant tile)

The tile obtained was hard and strong.

The tile had good weatherability and corrosion resistance.

The tile was light in weight.

### Example 4

Fabrication of snow-melting roof:

Fire resistant CRB ceramic tiles made in a manner as described in Example 2 were arranged on a crosspiece 5 so that the projection 2 of individual tiles 5 was engaged with the side face of the crosspiece 5. The tiles were each fixed by inserting a male terminal 6 of the crosspiece 5 into a corresponding terminal hole 3 of the tile, thereby ensuring electric conduction therebetween. An electric current of a low voltage was passed to confirm heat generation.

As will be apparent from the above, the fire resistant CRB ceramic tile of the invention is black in color and has such characteristics as light weight, good weatherability and good corrosion resistance. The tiles are found effective when applied to as a roofing tile for snow-melting roof.

The features disclosed in the foregoing description, in the claims and / or in the accompanying drawings may, both separately and in any combination thereof, be material for realising the invention in diverse forms thereof.

## Claims

1. A roofing tile comprising a fire resistant CRB ceramic, which is obtained by mixing and kneading defatted bran derived from rice bran and a thermosetting resin, primarily baking the resulting mixture in an inert gas at 700°C to 1000°C, crushing the resulting compact into carbonized powder, mixing and kneading the carbonized powder with a ceramic powder, a solvent and, optionally, a binder to provide a plasticized mixture (ceramic-solvent mixture), pressure forming the mixture at a pressure of 10 MPa to 100 MPa, and heat treating the resulting compact again in an atmosphere of an inert gas at 100 to 1400°C.

2. The roofing tile made of the fire resistant CRB ceramic according to Claim 1, wherein the tile has a projection for fixing the tile to a cleat therefor formed integrally therewith.

3. The roofing tile according to Claim 1 or 2, wherein terminal holes are provided in the tile so as to permit passage of an electric current.

4. The roofing tile according to any one of Claims 1 to 3, wherein an electric resistor for heat generation is integrally embedded inside the tile.

5. The roofing tile according to Claim 4, wherein the electric resistor is made of a nichrome wire, an RB ceramic or a CRB ceramic.

6. The roofing tile according to Claim 1, wherein the ceramic powder consists of one or more of powders of ceramics selected from the group consisting of SiO₂, Si₃N₄, ZrO₂, Al₂O₃, SiC, BN, WC, TiC, sialons, porcelain clay, feldspar clay and kaolin.

7. The roofing tile according to Claim 1, wherein the thermosetting resin consists of one or more of resins selected from the group consisting of phenolic resins, diaryl phthalate resins, unsaturated polyester resins, epoxy resins, polyimide resins and triazine resins.

8. The roofing tile according to Claim 1, wherein the binder consists of an organic binder and/or an inorganic binder.

9. The roofing tile according to Claim 1, wherein the mixing ratio by weight between the defatted bran and the thermosetting resin ranges from 50:50 to 90:10.

10. The roofing tile according to Claim 1, wherein the mixing ratio by weight of the carbonized powder and the ceramic powder ranges from 5:95 to 95:5.

11. A snow-melting roof structure comprising a plurality of roofing tiles set forth in any one of Claims 1 to 10, wherein individual roofing tiles have terminal holes, each having a terminal of a conductive member embedded in each tile, and the conductive member in one tile is electrically connected through a terminal provided at each cleat to a conductive member of an adjacent tile so that the plurality of roofing tiles are arranged to be electrically connected with one another whereby when a potential is applied across the plurality of roofing tiles, heat is generated in individual tiles to permit snow melting.
